# EUROPÄISCHE PATENTANMELDUNG

(11) **EP 3 683 950 A1**
(43) Veröffentlichungstag der Anmeldung: **22.07.2020**
(21) Anmeldenummer: 19152745.6
(22) Anmeldetag: 21.01.2019
(51) Int. Cl.: H02M 7/483, H02M 1/00

(54) **VERFAHREN ZUR REGELUNG EINES MODULARER MEHRPUNKTUMRICHTERS MIT HALB- UND VOLLBRÜCKENZELLEN**

(71) Anmelder: Siemens Aktiengesellschaft, 80333 München (DE)
(72) Erfinder: Dallmer-Zerbe, Kilian, 91088 Bubenreuth (DE); Semmler, Sebastian, 90427 Nürnberg (DE); Zorawik, Michael, 91352 Hallerndorf (DE)

(57) **Zusammenfassung**

Die Erfindung betrifft ein Verfahren zum Regeln einer Stromirchteranordnung (1), die wenigstens einen Stromrichterarm (5-10) mit einer Reihenschaltung zweipoliger Schaltmodule (SM1, SM2) umfasst, wobei jedes der Schaltmodule mehrere Halbleiterschalter sowie einen Energiespeicher (C) aufweist, wobei wenigstens einige der Schaltmodule Schaltmodule eines ersten Typs (SM1) und wenigstens einige weitere der Schaltmodule Schaltmodule eines zweiten Typs (SM2) sind. Bei dem erfindungsgemäßen Verfahren wird ein Spannungssollwert der Stromrichterregelung in einen ersten und einen zweiten Sollwertanteil aufgeteilt, wobei die Schaltmodule des ersten Typs anhand des ersten Sollwertanteils und die Schaltmodule des zweiten Typs anhand des zweiten Sollwertanteils angesteuert werden. Die Erfindung betrifft ferner eine Stromrichteranordnung mit einer Regelungseinrichtung (12), die zur Durchführung des erfindungsgemäßen Verfahrens eingerichtet ist.

## Beschreibung

Die Erfindung betrifft ein Verfahren zum Regeln einer Stromrichteranordnung, die wenigstens einen Stromrichterarm mit einer Reihenschaltung zweipoliger Schaltmodule umfasst, wobei jedes der Schaltmodule mehrere Halbleiterschalter sowie einen Energiespeicher aufweist, wobei wenigstens einige der Schaltmodule Schaltmodule eines ersten Typs und wenigstens einige weitere der Schaltmodule Schaltmodule eines zweiten Typs sind.

Ein solches Verfahren ist aus der WO 2012/103936 A1 bekannt. In jedem der Stromrichterarme der bekannten Stromrichteranordung, wobei die Stromrichterarme sich jeweils zwischen einem der Gleichspannungspole der Stromrichteranordnung und einem der Wechselspannungsanschlüsse erstrecken, sind Schaltmodule des ersten Typs in Form von Vollbrückenschaltmodulen und Schaltmodule des zweiten Typs in Form von Halbbrückenschaltmodulen angeordnet.

Üblicherweise wird bei der Regelung der Stromrichteranordnung ein Spannungssollwert vorgegeben, der die am Stromrichterarm zu stellende Armspannung vorgibt. Entsprechend wird der Spannungssollwert mittels einer Regelungseinrichtung der Stromrichteranordnung in Ansteuersignale umgesetzt, die an Ansteuerungsbaugruppen der einzelnen Schalmodule übermittelt werden. Gemäß der Ansteuersignale werden Schalthandlungen an den Schaltmodulen ausgelöst. Eine Schalthandlung verändert dabei einen Schaltzustand des Schaltmoduls durch geeignetes Schalten der Halbleiterschalter. Üblicherweise wird dabei der Energiespeicher des jeweiligen Schaltmoduls in den Strompfad des jeweiligen Stromrichterarms geschaltet oder überbrückt.

Werden in einer und derselben Stromrichteranordnung Schaltmodule zweier unterschiedlicher Typen verwendet, so stellt sich die besondere Herausforderung der gleichzeitigen Regelung bzw. Steuerung der beiden Schaltmodultypen. Das Regelungsverfahren muss insbesondere dafür sorgen, dass beide Schaltmodultypen energetisch bilanziert sind.

Die Aufgabe der Erfindung besteht darin, ein eingangs genanntes Verfahren vorzuschlagen, dass eine möglichst zuverlässige Regelung der Stromrichteranordnung ermöglicht.

Die Aufgabe wird erfindungsgemäß durch ein artgemäßes Verfahren gelöst, bei dem ein Spannungssollwert der Stromrichterregelung in einen ersten und einen zweiten Sollwertanteil aufgeteilt wird, die Schaltmodule des ersten Typs anhand des ersten Sollwertanteils und die Schaltmodule des zweiten Typs anhand des zweiten Sollwertanteils angesteuert werden. Es wird demnach eine Aufteilung der Regelung vorgeschlagen. Danach kann die Gruppe der Schaltmodule des ersten Typs nach der Aufteilung des Spannungssollwertes gemäß einer üblichen Regelung für Schaltmodule dieses Typs gesteuert werden. Entsprechend kann auch die Gruppe der Schaltmodule des zweiten Typs nach der Aufteilung des Spannungssollwertes gemäß einer üblichen Regelung für Schaltmodule dieses Typs gesteuert werden. Im Prinzip kann also eine bestehende Regelungsinfrastruktur bekannter Stromrichteranordnungen, die lediglich einen Typ von Schaltmodulen einsetzen, verwendet werden, wobei eine Sollwertaufteilung vorgelagert ist. Die Verwendung bekannter Regelungsverfahren und Regelungsstrukturen senkt vorteilhaft die Kosten der Regelung und erhöht die Zuverlässigkeit des Verfahrens, weil bekannte Regelungsbausteine meist bereits über eine entsprechende Qualifizierung verfügen und im Betrieb von Stromrichtern bewährt sind. Zudem lässt sich durch das erfindungsgemäße Verfahren die komplexe Regelung für zwei Schaltmodultypen auf eine einfache und zuverlässige Weise realisieren, weil eine komplexe und aufwendige gemischte Regelung der beiden Schaltmodultypen vermieden wird.

Gemäß einer Ausführungsform der Erfindung werden im Betrieb der Stromrichteranordnung an Anschlussklemmen der Schaltmodule des ersten Typs jeweils eine positive Schaltmodulspannung, eine negative Schaltmodulspannung oder eine Nullspannung, und an Anschlussklemmen der Schaltmodule des zweiten Typs jeweils eine positive Schaltmodulspannung oder eine Nullspannung erzeugt. Diese Konfiguration bzw. Wahl der Schaltmodultypen ist besonders vorteilhaft, weil auf diese Weise die Möglichkeit zur Spannungsmodulation erweitert wird, wodurch die energetische Ausnutzung der Stromrichteranordnung verbessert und die Übertragungsverluste gesenkt werden (falls die Stromrichteranordnung in einer Energieübertragungsanlage eingesetzt wird). Ein konkretes Beispiel für ein Schaltmodul des ersten Typs ist das Vollbrückenschaltmodul, ein Beispiel für ein Schaltmodul des zweiten Typs ist ein Halbbrückenschaltmodul. Die möglichen Beispiele sind durch die eben genannten selbstredend nicht erschöpft. Die positive Schaltmodulspannung entspricht dabei stets einer am Energiespeicher des Schaltmoduls anstehenden Energiespeicherspannung. Die negative Schaltmodulspannung entspricht der Energiespeicherspannung, jedoch mit negativer Polarität.

Vorzugsweise wird der Spannungssollwert mittels eines Vormodulators aufgeteilt, wobei der erste Sollwertanteil an ein erstes Steuerungsmodul übermittelt wird, der auf der Grundlage des ersten Sollwertanteils Steuersignale zur Steuerung der Schaltmodule des ersten Typs erzeugt, und der zweite Sollwertanteil an ein zweites Steuerungsmodul übermittelt wird, der auf der Grundlage des zweiten Sollwertanteils Steuersignale zur Steuerung der Schaltmodule des zweiten Typs erzeugt. Es wird mit dem Vormodulator ein Regelungsmodul bereitgestellt, das als eigenständige Hardware-Einheit oder Teil der gesamten Regelungsstruktur die Sollwertaufteilung bewerkstelligt. Mit anderen Worten kann der Vormodulator ein Softwarepaket oder auch eine eigenständige Baugruppe innerhalb der Regelungseinrichtung sein. Das erste und das zweite Steuerungsmodul können in machen Anwendungen auch als Modulatoren bezeichnet werden, weil sie für eine geeignete Modulation der Schaltvorgänge der Schaltmodule sorgen. Mit dem Vormodulator ist eine besonders einfache Struktur der Regelung realisierbar. Es ist sogar möglich, bereits bekannte Regelungseinrichtungen, die bei Stromrichteranordnungen mit lediglich einem Schaltmodultyp eingesetzt werden, im Zusammenhang mit einer Erweiterung durch den Vormodulator weiter zu verwenden.

Bevorzugt wird der Spannungssollwert unter Berücksichtigung der Anzahl der Schaltmodule des ersten Typs und der Anzahl der Schaltmodule des zweiten Typs in dem wenigstens einem Stromrichterarm, vorzugsweise in jedem Stromrichterarm, sowie unter Berücksichtigung von Schaltzuständen der Schaltmodule aufgeteilt. Auf diese Weise können insbesondere unzulässige Sollwertvorgaben vermieden werden. Eine unzulässige Sollwertvorgabe für ein Halbbrückenschaltmodul wäre beispielsweise, eine negative Schaltmodulspannung zu stellen.

Zweckmäßigerweise wird der Spannungssollwert unter Berücksichtigung von Schaltmodulspannungen beziehungsweise der Energiespeicherspannungen der Schaltmodule aufgeteilt. Dieses Vorgehend ermöglicht eine effiziente energetische Bilanzierung. Insbesondere kann vermieden werden, dass die Schaltmodulspannungen ,auseinanderlaufen', d.h. die Energiespeicherspannungen der Energiespeicher der Schaltmodule zu stark von einem gewünschten Vorgabewert, bspw. Mittelwert, abweichen.

Mittels des Vormodulators kann vorteilhafterweise aus einem Armstrom der Stromrichteranordnung und einem gleichspannungsseitigen Gleichstrom eine Lastflussrichtung eines Stromrichterlastflusses bestimmt werden. Der Armstrom ist dabei der durch den Stromrichterarm fließender Strom. Dies ist insbesondere bei Anwendungen in der Energieübertragung vorteilhaft.

Gemäß einer Ausführungsform der Erfindung werden die Schaltmodule des Stromrichterarmes mit einem Modulationsgrad größer als eins gesteuert. Alle Stromrichterarme der Stromrichteranordnung stellen eine Armspannung, die im Betrieb eine Überlagerung einer Gleichspannung UarmDC und einer Wechselspannung UarmAC ist. Der Modulationsgrad M ist das Verhältnis dieser beiden Anteile: M = |UarmAC|/UarmDC. Mit einem Modulationsgrad größer als eins kann die Stromrichteranordnung energetisch besser ausgenutzt werden. Dabei sinkt die Armspannung zeitweise unter den Wert null, so dass in diesen Fällen die Schaltmodule des ersten Typs besonders stark beansprucht sind, was bei der Stromrichterregelung geeigneterweise berücksichtigt wird.

Bevorzugt wird mittels eines Energiereglers eine Energieregelung durchgeführt, wobei an einem Ausgang des Energiereglers eine Energievorgabe für eine zu stellende Gesamtenergie der Schaltmodule des ersten Typs bereitgestellt wird, wobei die Energievorgabe an den Vormodulator übermittelt wird, wobei der Spannungssollwert in Abhängigkeit von der Energievorgabe aufgeteilt wird, insbesondere durch entsprechende Aufteilung des Spannungssollwertes. Die Gesamtenergie entspricht der Summe der Schaltmodulspannungen der betreffenden Schaltmodule. Auf diese Weise kann sichergestellt werden, dass die Schaltmodulspannungen beziehungsweise die Energiespeicherspannungen der Schaltmodule des ersten Typs und die Schaltmodulspannungen beziehungsweise die Energiespeicherspannungen der Schaltmodule des zweiten Typs nicht über einen vorgegebenen Schwellwert hinaus voneinander abweichen. Dies könnte beispielsweise dann passieren, wenn der Spannungssollwert unabhängig von der Energievorgabe stets in einen größeren positiven Anteil für die Schaltmodule des ersten Typs und einen stets kleineren positiven Anteil für die Schaltmodule des zweiten Typs aufgeteilt würde.

Besonders bevorzugt wird die Energievorgabe in Abhängigkeit von einer mittleren Energiespeicherspannung der Schaltmodule des ersten Typs und einer mittleren Energiespeicherspannung der Schaltmodule des zweiten Typs ermittelt. Auf diese Weise können die Abweichungen der Schaltmodulspannung beziehungsweise der Energiespeicherspannung auf die entsprechenden Mittelwerte bezogen werden.

Die Erfindung betrifft ferner eine Stromrichteranordnung, die wenigstens einen Stromrichterarm mit einer Reihenschaltung zweipoliger Schaltmodule umfasst, wobei jedes der Schaltmodule mehrere Halbleiterschalter sowie einen Energiespeicher aufweist, wobei wenigstens einige der Schaltmodule Schaltmodule eines ersten Typs und wenigstens einige weitere der Schaltmodule Schaltmodule eines zweiten Typs sind, sowie einer Regelungseinrichtung.

Eine solche Stromrichteranordnung ist aus der bereits zuvor erwähnten Druckschrift WO 2012/103936 A1 bekannt.

Die Aufgabe der Erfindung besteht darin, eine solche Stromrichteranordnung anzugeben, die möglichst zuverlässig im Betrieb ist.

Die Aufgabe wird bei einer artgemäßen Stromrichteranordnung erfindungsgemäß dadurch gelöst, dass die Regelungseinrichtung, die zum Durchführen eines erfindungsgemäßen Verfahrens eingerichtet ist.

Die Vorteile der erfindungsgemäßen Stromrichteranordnung ergeben sich insbesondere aus der Eignung zur Durchführung des erfindungsgemäßen Verfahrens und den damit verbundenen, zuvor beschriebenen Vorteilen. Die Ausgestaltung der Stromrichteranordnung kann selbstverständlich alle Varianten und Merkmale umfassen, die zuvor im Zusammenhang mit dem Verfahren beschrieben wurden, sowohl einzeln als auch in Kombination.

Die Erfindung soll im Folgenden anhand der Figuren 1 bis 5 weiter erläutert werden.
Figur 1 zeigt ein Ausführungsbeispiel einer erfindungsgemäßen Stromrichteranordnung in einer schematischen Darstellung;
Figur 2 zeigt ein Beispiel eines Schaltmoduls des ersten Typs in einer schematischen Darstellung;
Figur 3 zeigt ein Beispiel eines Schaltmoduls des zweiten Typs in einer schematischen Darstellung;
Figur 4 zeigt ein Beispiel einer Regelungseinrichtung zur Durchführung des erfindungsgemäßen Verfahrens in einer schematischen Darstellung;
Figur 5 zeigt ein Beispiel einer Sollwertaufteilung für ein erfindungsgemäßes Verfahren in einer schematischen Darstellung.

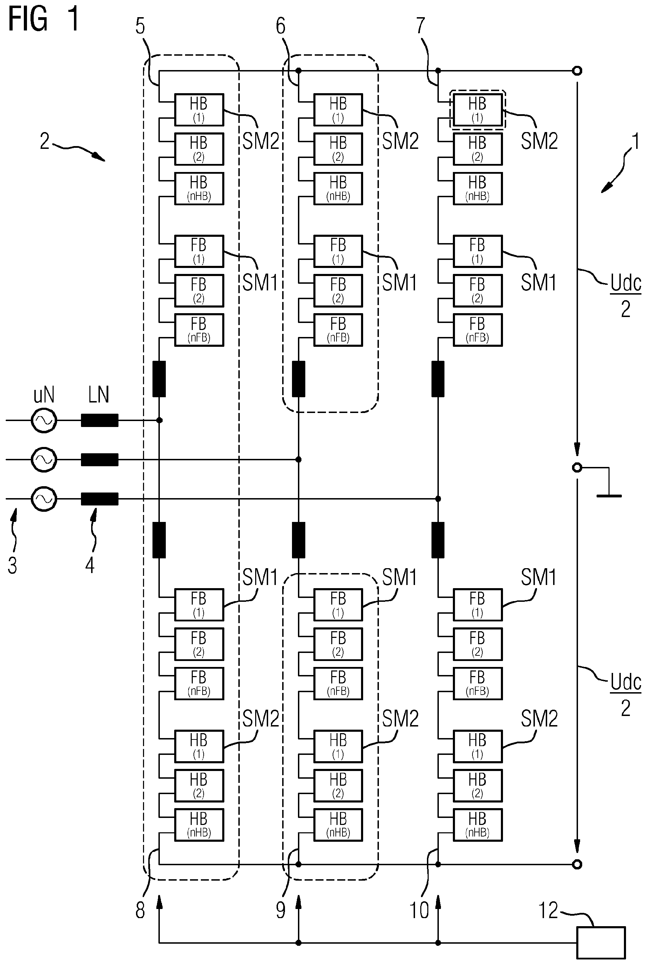

In Figur 1 ist eine Stromrichteranordnung 1 dargestellt. Die Stromrichteranordnung 1 umfasst einen modularen Mehrstufenstromrichter (MMC) 2, der im dargestellten Beispiel zur Umwandlung einer Wechselspannung eines Wechselspannungsnetzes 3, mit dem der MMC 2 mittels eines Netztransformators 4 verbunden ist (wobei lediglich die sekundärseitigen Wicklungen figürlich dargestellt sind), in eine Gleichspannung Udc.

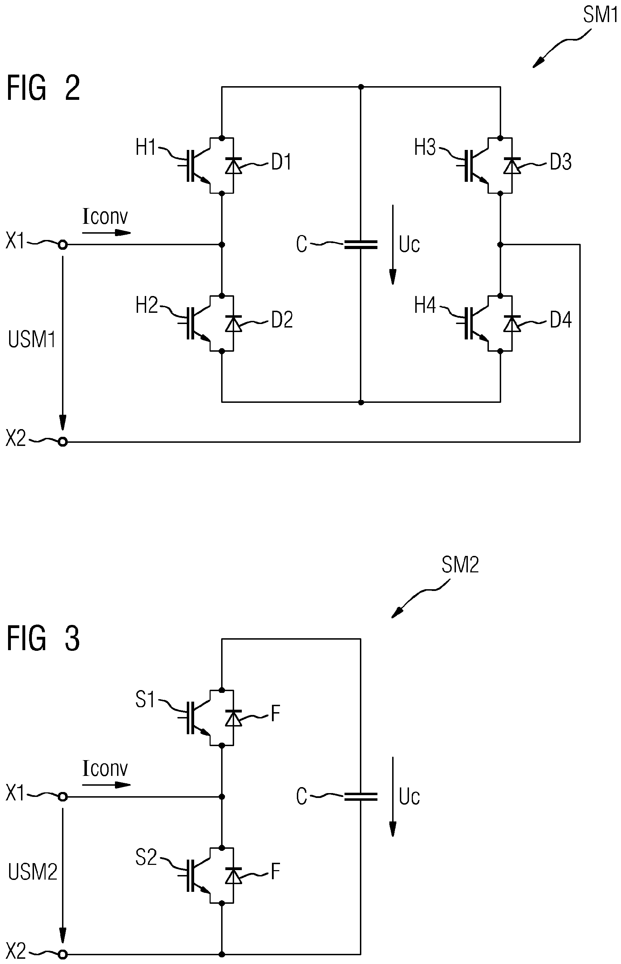

Der MMC 2 umfasst sechs Stromrichterarme 5-10, die miteinander in einer Doppelsternschaltung verbunden sind. Jeder der gleichartig aufgebauten Stromrichterarme 5-10 umfasst eine Arminduktivität 11 sowie eine Reihenschaltung zweipoliger Schaltmodule SM1 des ersten Typs und Schaltmodule SM2 des zweiten Typs. Auch die Anzahl der Schaltmodule SM1 bzw. SM2 in jedem Stromrichterzweig 5-10 ist grundsätzlich beliebig und an die jeweilige Anwendung anpassbar. Die Schaltmodule SM1 des ersten Typs können beispielsweise Vollbrücken-Schaltmodule, die Schaltmodule SM2 des zweiten Typs beispielsweise Halbbrücken-Schaltmodule sein, auf deren Aufbau in den nachfolgenden Figuren 2 und 3 näher eingegangen wird. Jedes Schaltmodul SM umfasst steuerbare Halbleiterschalter, z.B. IGBT oder dergleichen, einen Energiespeicher sowie eine Steuerungsbaugruppe, mittels der die Halbleiterschalter angesteuert werden können. Es ist darüber hinaus grundsätzlich denkbar, dass die Stromrichteranordnung 1 weitere Schaltmodul-Typen umfasst.

Die Stromrichteranordnung 1 umfasst ferner eine zentrale Regelungseinrichtung 12, die zum Regeln des MMC 2 und zum Ansteuern der Schaltmodule SM eingerichtet ist. Die Regelungseinrichtung 12 erhält von einer übergeordneten Instanz Vorgaben bezüglich der geforderten Wirkleistung und Blindleistung, die von der Regelungseinheit in Sollwerte einiger Regelungsparameter umgesetzt werden. Die Regelungsparameter können beispielsweise eine wechselspannungsseitige Spannung Uac, ein wechselspannungsseitiger Strom Iac, ein gleichspannungsseitiger Strom Idc und/oder eine gleichspannungsseitige Spannung Udc sein. In Stromrichteranlagen, die als ein symmetrischer Monopol konzipiert sind, sind eine Spannung zwischen dem positiven Gleichspannungspol und dem Erdpotenzial, Udc+, und eine Spannung zwischen dem negativen Gleichspannungspol und dem Erdpotenzial, Udc-, von Bedeutung.

Figur 2 zeigt ein Schaltmodul SM1 des ersten Typs, das für den Stromrichter der Figur 1 geeignet ist, und das in einer Vollbrückenschaltung geschaltet ist. Das Schaltmodul SM1 umfasst einen ersten abschaltbaren Halbleiterschalter H1, dem eine erste Freilaufdiode D1 antiparallel geschaltet ist, einen zweiten abschaltbaren Halbleiterschalter H2, dem eine zweite Freilaufdiode D2 antiparallel geschaltet ist, wobei der erste und der zweite Halbleiterschalter H1, H2 in einer ersten Halbleiterreihenschaltung miteinander verbunden sind und gleiche Durchlassrichtung aufweisen. Das Schaltmodul SM2 umfasst ferner einen dritten abschaltbaren Halbleiterschalter H3, dem eine dritte Freilaufdiode D3 antiparallel geschaltet ist, und einen vierten abschaltbaren Halbleiterschalter H4, dem eine vierte Freilaufdiode D4 antiparallel geschaltet ist, wobei der dritte und der vierte Halbleiterschalter H3, H4 in einer zweiten Halbleiterreihenschaltung miteinander verbunden sind und gleiche Durchlassrichtung aufweisen. Die beiden Halbleiterreihenschaltungen sind parallel zueinander und zu einem Energiespeicher C in Form eines Kondensators angeordnet, an dem eine Kondensatorspannung Uc ansteht. Des Weiteren umfasst das Schaltmodul SM1 ferner eine erste Anschlussklemme X1, die zwischen den Halbleiterschaltern H1, H2 der ersten Halbleiterreihenschaltung angeordnet ist, und eine zweite Anschlussklemme X2, die zwischen den Halbleiterschaltern H3, H4 der zweiten Halbleiterreihenschaltung angeordnet ist. Durch geeignete Ansteuerung der Halbleiterschalter H1-4 kann an den Anschlüssen X1, X2 eine Schaltmodulspannung USM1 erzeugbar, die der Kondensatorspannung Uc entspricht, der negativen Kondensatorspannung -Uc entspricht, oder aber eine Nullspannung.

Figur 3 zeigt ein Schaltmodul SM2 des zweiten Typs, das für den Stromrichter der Figur 1 geeignet ist, und das in einer Halbbrückenschaltung geschaltet ist. In einem Kondensatorzweig ist eine Parallelschaltung eines ersten Halbleiterschalters S1 und eines Kondensators C angeordnet. In einem Brückenzweig zwischen zwei Anschlüssen X1, X2 des ersten Schaltmoduls SM2 ist ein zweiter Halbleiterschalter angeordnet. Den beiden Halbleiterschaltern S1, S2 ist jeweils eine Freilaufdiode F antiparallel geschaltet. Durch geeignete Ansteuerung der beiden Halbleiterschalter S1, S2 kann an den Anschlüssen X1, X2 eine Schaltmodulspannung USM2 erzeugbar, die der Kondensatorspannung Uc entspricht, oder aber eine Nullspannung.

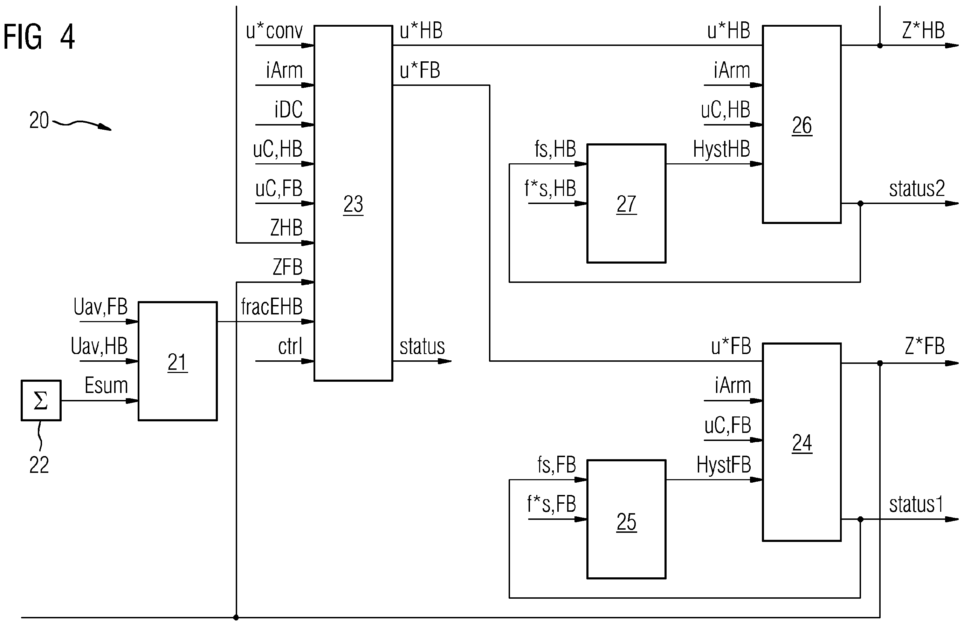

In Figur 4 ist eine Regelungseinrichtung 20 dargestellt, die insbesondere als die Regelungseinrichtung 12 der Figur 1 oder deren Teil eingesetzt werden kann. Die Regelungseinrichtung 20 umfasst einen Energieregler 21, dem eingangsseitig eine mittlere Energiespeicherspannung UavFB der Schaltmodule des ersten Typs, eine mittlere Energiespeicherspannung UavHB der Schaltmodule des zweiten Typs sowie eine mittels eines Summengliedes 22 ermittelte Gesamtenergie Esum des Stromrichters zugeführt werden. Ausgangsseitig stellt der Energieregler eine Energievorgabe fracEHB für die Schaltmodule des zweiten Typs bereit und übermittelt diese an einen Vormodulator 23. Der Vormodulator 23 enthält als Eingangsgrößen zudem den Spannungssollwert u*conv für die zu stellende Armspannung für jeden Stromrichterarm, einen Armstrom iarm, einen gleichspannungsseitigen Strom iDC, die Schaltmodulspannungen uCFB, uCHB der Schaltmodule des ersten und des zweiten Typs, eine Zustandsinformation zFB, zHB über die Schaltzustände der Schaltmodule. Ferner umfasst der Vormodulator einen Kontrolleingang ctrl. Ausgangsseitig stellt der Vormodulator 23 einen ersten Sollwertanteil u*FB und einen zweiten Sollwertanteil u*HB sowie eine Statusinformation status. Der erste Sollwertanteil u*FB wird einem ersten Steuerungsmodul 24 zugeführt, das eingangsseitig zudem den Armstrom, die Schaltmodulspannungen uCFB sowie ein Ausgangssignal HystFB eines ersten Frequenzregelungsmoduls 25 erhält. Das erste Steuerungsmodul 24 stellt ausgangsseitig eine Statusinformation statusl sowie eine Vorgabe z*FB über die zu erzeugenden Schaltzustände der Schaltmodule des ersten Typs. Das erste Frequenzregelungsmodul 25 erhält eingangsseitig die Schaltfrequenzen fsFB der Schaltmodule des ersten Typs sowie einen entsprechenden Schaltfrequenzsollwert f*sFB. Der zweite Sollwertanteil u*HB wird entsprechend einem zweiten Steuerungsmodul 26 zugeführt, das eingangsseitig zudem den Armstrom, die Schaltmodulspannungen uCHB sowie ein Ausgangssignal HystHB eines zweiten Frequenzregelungsmoduls 27 erhält. Das zweite Steuerungsmodul 26 stellt ausgangsseitig eine Statusinformation status2 sowie eine Vorgabe z*HB über die zu erzeugenden Schaltzustände der Schaltmodule des zweiten Typs. Das zweite Frequenzregelungsmodul 27 erhält eingangsseitig die Schaltfrequenzen fsHB der Schaltmodule des zweiten Typs sowie einen entsprechenden Schaltfrequenzsollwert f*sHB.

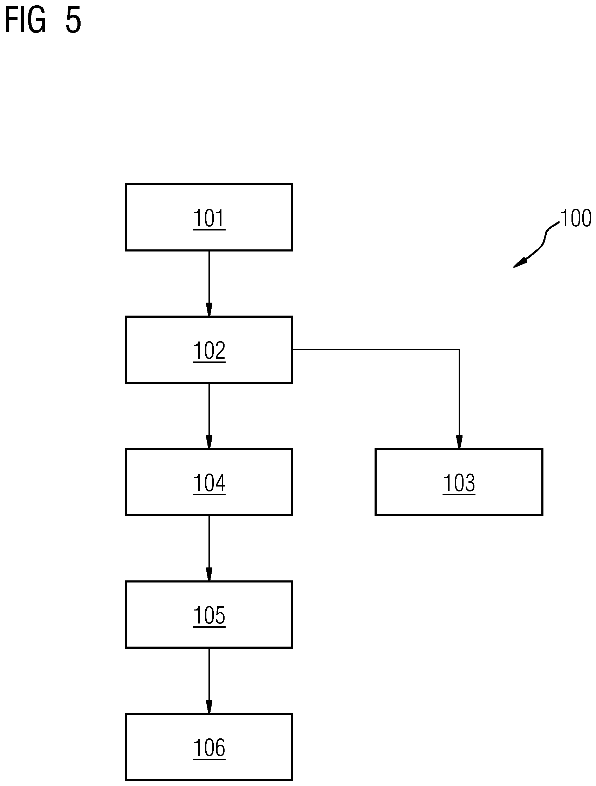

In Figur 5 ist ein schematisches Ablaufdiagramm 100 dargestellt, anhand dessen ein Beispiel einer Aufteilung des Spannungssollwertes in den ersten Sollwertanteil u*FB zur Steuerung der Schaltmodule des ersten Typs und einen zweiten Sollwertanteil u*HB zur Steuerung der Schaltmodule des zweiten Typs erläutert wird. Zunächst wird in einem ersten Schritt 101 ein Spannungssollwert u*conv für die zu stellende Armspannung in einem der Stromrichterarme bereitgestellt. In einem zweiten Schritt 102 wird überprüft, ob der Spannungssollwert u*conv kleiner oder gleich null ist. Ist dies der Fall, so werden in einem dritten Schritt 103 die Sollwertanteile wie folgt festgelegt: u*FB = u*conv; u*HB = 0. Gilt, dass u*conv > 0, so wird in einem vierten Schritt 104 eine Spannungsdifferenz e gemäß der Formel e = u*conv - (uHB + uFB) berechnet, wobei uFB die tatsächliche (Gesamt-)Spannung der Schaltmodule des ersten Typs und uHB die tatsächliche Spannung der Schaltmodule des zweiten Typs im betreffenden Stromrichterarm sind. In einem fünften Schritt 105 werden weitere Informationen bestimmt: eine Leistungsflussrichtung (Gleichrichterbetrieb oder Wechselrichterbetrieb), Armstrom, maximale und minimale Schaltmodulspannungen der Schaltmodule des ersten und des zweiten Typs sowie augenblickliche Schaltmodulzustände der Schaltmodule im betreffenden Stromrichterarm. Auf der Basis dieser Informationen wird in einem weiteren Schritt 106 die Aufteilung des Spannungssollwertes u*conv in den ersten und zweiten Sollwertanteil, u*FB, u*HB bestimmt. Beispielsweise wird, falls e = 0 ist, u*FB = uFB und u*HB = uHB gesetzt. Abweichen davon kann, falls die Energievorgaben eine Auswahl zur Schaltung von Schaltmodulen des ersten Typs erfordern, u*HB = uHB und u*FB = uFB + e festgelegt werden. Mittels geeigneter Steuerungseinrichtungen werden die Sollwertanteile dann in entsprechende Schaltbefehle bzw. Schalthandlungen für die einzelnen Schaltmodule umgewandelt.

## Patentansprüche

1. Verfahren zum Regeln einer Stromrichteranordnung (1), die wenigstens einen Stromrichterarm (5-10) mit einer Reihenschaltung zweipoliger Schaltmodule (SM1, SM2) umfasst, wobei jedes der Schaltmodule (SM1, SM2) mehrere Halbleiterschalter (H1-4,S1,2) sowie einen Energiespeicher (C) aufweist, wobei wenigstens einige der Schaltmodule Schaltmodule eines ersten Typs (SM1) und wenigstens einige weitere der Schaltmodule Schaltmodule eines zweiten Typs (SM2) sind,
bei dem
ein Spannungssollwert der Stromrichterregelung in einen ersten und einen zweiten Sollwertanteil aufgeteilt wird,
die Schaltmodule des ersten Typs (SM1) anhand des ersten Sollwertanteils und
die Schaltmodule des zweiten Typs (SM2) anhand des zweiten Sollwertanteils angesteuert werden.

2. Verfahren nach Anspruch 1, wobei im Betrieb der Stromrichteranordnung (1) an Anschlussklemmen (X1, X2) der Schaltmodule des ersten Typs (SM2) jeweils eine positive Schaltmodulspannung, eine negative Schaltmodulspannung oder eine Nullspannung, und an Anschlussklemmen der Schaltmodule des zweiten Typs jeweils eine positive Schaltmodulspannung oder eine Nullspannung erzeugt werden.

3. Verfahren nach einem der vorangehenden Ansprüche, wobei der Spannungssollwert mittels eines Vormodulators (23) aufgeteilt wird, wobei der erste Sollwertanteil an ein erstes Steuerungsmodul (24) übermittelt wird, der auf der Grundlage des ersten Sollwertanteils Steuersignale zur Steuerung der Schaltmodule des ersten Typs (SM1) erzeugt, und der zweite Sollwertanteil an ein zweites Steuerungsmodul (26) übermittelt wird, der auf der Grundlage des zweiten Sollwertanteils Steuersignale zur Steuerung der Schaltmodule des zweiten Typs (SM2) erzeugt.

4. Verfahren nach einem der vorangehenden Ansprüche, wobei der Spannungssollwert unter Berücksichtigung der Anzahl der Schaltmodule des ersten Typs (SM1) und der Anzahl der Schaltmodule des zweiten Typs (SM2) in dem wenigstens einem Stromrichterarm, vorzugsweise in jedem Stromrichterarm, sowie unter Berücksichtigung von Schaltzuständen der Schaltmodule aufgeteilt wird.

5. Verfahren nach einem der vorangehenden Ansprüche, wobei der Spannungssollwert unter Berücksichtigung von Energiespeicherspannungen der Schaltmodule (SM1, SM2) aufgeteilt wird.

6. Verfahren nach einem der vorangehenden Ansprüche, wobei mittels des Vormodulators (23) aus einem Armstrom der Stromrichteranordnung und einem gleichspannungsseitigen Gleichstrom eine Lastflussrichtung eines Stromrichterlastflusses bestimmt wird.

7. Verfahren nach einem der vorangehenden Ansprüche, wobei die Schaltmodule des Stromrichterarmes (5-10) mit einem Modulationsgrad größer als eins gesteuert werden.

8. Verfahren nach einem der vorangehenden Ansprüche, wobei mittels eines Energiereglers (21) eine Energieregelung durchgeführt wird, wobei an einem Ausgang des Energiereglers eine Energievorgabe für eine zu stellende Gesamtenergie der Schaltmodule des ersten Typs (SM1) bereitgestellt wird, wobei die Energievorgabe an den Vormodulator (23) übermittelt wird, wobei der Spannungssollwert in Abhängigkeit von der Energievorgabe aufgeteilt wird.

9. Verfahren nach Anspruch 8, wobei die Energievorgabe in Abhängigkeit von einer mittleren Energiespeicherspannung der Schaltmodule des ersten Typs (SM1) und einer mittleren Energiespeicherspannung der Schaltmodule des zweiten Typs (SM2) ermittelt wird.

10. Stromrichteranordnung (1), die wenigstens einen Stromrichterarm mit einer Reihenschaltung zweipoliger Schaltmodule (Sm1, SM2) umfasst, wobei jedes der Schaltmodule mehrere Halbleiterschalter (H1-4, S1, S2) sowie einen Energiespeicher (C) aufweist, wobei wenigstens einige der Schaltmodule Schaltmodule eines ersten Typs (SM1) und wenigstens einige weitere der Schaltmodule Schaltmodule eines zweiten Typs (SM2) sind, sowie einer Regelungseinrichtung 12(), die zum Durchführen eines Verfahrens nach einem der Ansprüche 1 bis 9 eingerichtet ist.
